# EUROPÄISCHE PATENTANMELDUNG

(11) **EP 2 837 290 A1**
(43) Veröffentlichungstag der Anmeldung: **18.02.2015**
(21) Anmeldenummer: 13180519.4
(22) Anmeldetag: 15.08.2013
(51) Int. Cl.: A23F 3/18, A23F 3/36, A47J 31/00

(54) **Verfahren und Vorrichtung zur Herstellung eines Teegetränks**

(71) Anmelder: Radeberger Gruppe KG, 60598 Frankfurt am Main (DE)
(72) Erfinder: Krahl, Moritz Dr., 60598 Frankfurt am Main (DE); Zboralski, Boris, 87437 Kempten (DE)
(74) Vertreter: Knoblauch, Andreas

(57) **Zusammenfassung**

Verfahren zur Herstellung eines Teegetränks, bei dem Teerohstoff und Flüssigkeit miteinander in Kontakt gebracht werden, wobei man in einem Verfahrensschritt die Teerohstoffe in einer stehenden Flüssigkeit für eine vorbestimmte Verweilzeit und in einem anderen Verfahrensschritt mit einer durchströmenden Flüssigkeit in Kontakt bringt.

## Beschreibung

Die Erfindung betrifft ein Verfahren sowie eine Vorrichtung zur Herstellung eines Teegetränks, bei dem Teerohstoff und Flüssigkeit zur Gewinnung einer Teelösung miteinander in Kontakt gebracht werden.

Tee wird seit alters her durch das Übergießen von getrockneten oder frischen Teerohstoffen, wie Blättern, Blüten, Halmen, Körnern, Samen, Wurzeln oder anderen Pflanzenbestandteilen mit heißem oder kochendem Wasser zubereitet.

Nach Ablauf der vorbestimmten Zeit werden die Teerohstoffe entfernt und der Extraktionsprozess gestoppt. Im großtechnischen Maßstab bei einer industriellen oder semiindustriellen Teeherstellung stößt die traditionelle Teeherstellung aufgrund der physikalischen Gegebenheiten an ihre Grenzen.

Bekannte Anlagen zur Teeherstellung basieren auf dem Prinzip eines kontinuierlichen Auswaschens einer großen Menge an Teerohstoffen mit Wasser im Durchflussverfahren. Hier wird ein nahezu gesättigtes Teekonzentrat gewonnen, in dem sämtliche wasserlöslichen Bestandteile der eingesetzten Teerohstoffe, unabhängig ob erwünscht oder unerwünscht, gelöst sind. Eine differenzierte und gezielte Lösung von erwünschten, edlen Inhaltsstoffen der Teerohstoffe ist bei diesen bekannten Durchflussverfahren nicht steuerbar. Unerwünschte Inhaltsstoffe sind beispielsweise Polyphenole, Catechine, sowie Gerb- und Bitterstoffe. Bei den bekannten Durchflussverfahren steht das primäre Ziel im Vordergrund, einen maximalen Ertrag an Teekonzentrat aus den eingesetzten Teerohstoffen zu gewinnen. Diese Teekonzentrate werden anschließend auf Trinkstärke verdünnt.

Es ist daher Aufgabe der vorliegenden Erfindung, ein industrielles Verfahren zur Herstellung eines Teegetränks anzugeben, mit dem ein qualitativ hochwertiges und trinkfertiges Teegetränk hergestellt werden kann.

Diese Aufgabe wir dadurch gelöst, dass man in einem Verfahrensschritt die Teerohstoffe für eine vorbestimmte Verweilzeit in einer stehenden Flüssigkeit und in einem anderen Verfahrensschritt mit einer strömenden Flüssigkeit in Kontakt bringt.

Bei diesem Verfahrensschritt erfolgt die Teeherstellung wie folgt: Bei einem ersten Verfahrensschritt erfolgt eine Extraktion in stehender Flüssigkeit, bei der die Teerohstoffe unbewegt mit der Flüssigkeit in Kontakt sind. Dies kann drucklos oder unter Druck erfolgen. Bei einem anderen Verfahrensschritt erfolgt die Extraktion in strömender Flüssigkeit, die die Teerohstoffe in Bewegung versetzt. Die Reihenfolge der Verfahrensschritte liegt nicht fest und ist abhängig von dem verwendeten Teerohstoff. Bei Arten von schwer löslichen Teerohstoffen, wie zum Beispiel Wurzeln, kann zunächst beispielsweise ein Aufweichvorgang in einer stehenden Flüssigkeit von Vorteil sein. Es ist aber auch denkbar, dass als erster Schritt die Teerohstoffe mit einer strömenden Flüssigkeit in Kontakt gebracht werden, um einen umfassenderen und intensiven Kontakt zwischen Flüssigkeit und Teerohstoff zu erreichen. Die Reihenfolge der Verfahrensschritte sowie weitere Verfahrensparameter wie zum Beispiel Druck und Temperatur der Flüssigkeit, Mengenverhältnis von Teerohstoff zu Flüssigkeit, Dauer der einzelnen Verfahrensschritte werden im Einzelnen so aufeinander abgestimmt und in Abhängigkeit von dem eingesetzten Teerohstoff optimiert, dass bei jedem Verfahrensschritt und in jeder Phase der Extraktion edle und gewünschte Inhaltsstoffe gelöst sowie unedle und unerwünschte Inhaltsstoffe weniger oder gar nicht gelöst werden.

Bei einer bevorzugten Ausführungsform ist vorgesehen, dass nach Ablauf der Verweilzeit die Teelösung abgeführt und beim Abführen der Teelösung gleichzeitig eine vorbestimmte Menge einer Flüssigkeit dem Teerohstoff zugeführt wird.

Bei diesem erfindungsgemäßen Verfahren erfolgt die Teeherstellung wie folgt: zunächst werden die Teerohstoffe in einem, vom jeweiligen Teerohstoff abhängigen Verhältnis mit Wasser aufgegossen, dessen Temperatur wiederum vom jeweiligen Teerohstoff abhängt. Dabei kann nur eine Teesorte oder eine Mischung aus verschiedenen Teerohstoffen verwendet werden. Die Verfahrensparameter Mengenverhältnis von Tee zu Wasser, Temperatur des Wassers sowie Dauer der Verweilzeit sind abhängig von den verarbeiteten Teerohstoffen und werden so aufeinander abgestimmt, dass der Übergang von unerwünschten Gerb- und Bitterstoffen reduziert, der von erwünschten Aroma-, Geschmacks- und Farbstoffen gesteigert wird. In technologischer Hinsicht erfolgt bei dieser Verfahrensstufe ein intensives Durchweichen der Teerohstoffe und eine gute Vorlösung der erwünschten Aroma-, Geschmacks- und Farbstoffe. Dies kann unter Druck oder drucklos erfolgen. Nach der Vorlösung wird die gewonnene Teelösung abgeführt und gleichzeitig eine vorbestimmte Menge einer Flüssigkeit den Teerohstoffen zugeführt. Diese werden dabei durchströmt. Das Durchströmen kann kontinuierlich, diskontinuierlich, im Kreislauf oder aber in einer Richtung erfolgen. Ziel ist es, eine weitere Durchmischung der Rohstoffe und eine weitere Verbesserung des Kontakts zwischen Teerohstoffen und Wasser zu erzielen.

Dabei hatte sich als besonders vorteilhaft erwiesen, dass als Flüssigkeit frisches Wasser den Teerohstoffen zugeführt wird. Dieses Wasser kann eine niedrige oder hohe Temperatur aufweisen, je nach Sorte des verwendeten Teerohstoffs. Durch die Strömung des Wassers kommen die Teerohstoffe in Bewegung und der Kontakt zwischen den Teerohstoffen und dem Wasser wird weiter verbessert. Durch dieses erfindungsgemäße Verfahren können in jeder Verfahrensstufe die für die Teeherstellung wichtigen Parameter wie Kontakttemperatur sowie Verweilzeit individuell und spezifisch für jeden verarbeiteten Teerohstoff auf jeder Verfahrensstufe optimiert gesteuert werden.

In einer bevorzugten Ausführungsform ist vorgesehen, dass eine der Menge der abgeführten Teelösung entsprechende Menge an Flüssigkeit dem Teerohstoff zugeführt wird, wodurch ein konstanter Volumenstrom entsteht. Dadurch erfolgt ein weiterer Austausch eines möglicherweise gesättigten Wassers um weitere erwünschte Aroma-, Farb- und Geschmackskomponenten zu gewinnen. Durch eine entsprechende Abstimmung von Zulaufmenge und Ablaufmenge des verwendeten Wassers wird verhindert, dass die Teerohstoffe trockenfallen und der Lösungsvorgang damit abgeschlossen würde. Auch hier werden die Verfahrensparameter Durchflussvolumen und Durchflusszeit in Abhängigkeit des eingesetzten Teerohstoffs so aufeinander abgestimmt, dass ein trinkfertiges Teegetränk mit optimaler Qualität hergestellt wird.

Vorteilhafterweise bringt man die Teerohstoffe und das Wasser in einem Behältnis miteinander in Kontakt und erzeugt nach Ablauf der Verweilzeit eine Strömung von einem Einlass des Behältnisses zu einem Auslass des Behältnisses. Durch gleichzeitiges Öffnen von einem Zulaufventil in dem Einlass des Behältnisses und einem Ablaufventil in dem Auslass des Behältnisses wird ein konstanter Volumenstrom, beispielsweise mit temperiertem Heißwasser durch die auszuwaschenden Teerohstoffe geführt.

Bevorzugterweise wird zur Entleerung des Behältnisses das Behältnis mit einem unter Druck stehendem Gas beaufschlagt. Hierbei kommen Luft, Kohlensäure oder Inertgase zum Einsatz, die in der Lebensmittelindustrie zugelassen sind. Dabei wird mit einem leichten Überdruck gearbeitet. Auch diese schonende Vorgehensweise wirkt sich äußerst positiv auf die Qualität des erzeugten Teegetränks aus.

Es hat sich weiterhin als vorteilhaft erwiesen, dass nach der Entleerung des Behältnisses das an dem Teerohstoff haftende Wasser gelöst wird. In dem an dem Teerohstoff haftenden Wasser ist durch den intensivsten Kontakt zwischen Wasser und Teerohstoff ein bedeutender Teil des gewünschten Aromaspektrums enthalten. Daher ist es erwünscht, auch diese Aromakomponenten zu gewinnen.

Vorteilhafterweise ist daher vorgesehen, dass zur Lösung des anhaftenden Wasser Druckstöße mit Gas erzeugt werden. Das aromareiche Haftwasser benetzt in Form von Tröpfchen die Oberfläche der Teerohstoffe. Durch Druckstöße werden diese Tröpfchen mitgerissen und das wertvolle Aroma somit gewonnen.

Wird beim Entleeren des Behältnisses ein gasförmiges Fluid mit Überdruck verwendet, ist es alternativ auch denkbar, anstelle der Druckstöße das gasförmige Fluid zu entspannen. Auch dadurch wird das anhaftende Haftwasser gewonnen. Zur Erzeugung der Druckstöße kann Luft, Kohlensäure oder ein anderes Gas verwendet werden. Zu beachten ist dabei, dass das verwendete Gas in der Lebensmittelindustrie zugelassen ist. Durch die Verwendung von Gas wird der bereits abgeschlossene Lösungs- und Extraktionsprozess nicht verlängert, so dass die von der verarbeiteten Teesorte abhängige und damit definierte Kontaktzeit nicht unerwünscht verlängert wird. Auch diese Maßnahme resultiert in einer optimalen Qualität des hergestellten Teegetränks.

Das erfindungsgemäße Verfahren zur Herstellung eines Teegetränks wird in einer Vorrichtung durchgeführt, bei dem das Behältnis ein Zuflussventil und ein Abflussventil sowie eine Steuereinrichtung aufweist, die das Zuflussventil und das Abflussventil gleichzeitig öffnet.

Über das Zuflussventil wird in einer Ausführungsform der Erfindung das Behältnis in einem ersten Verfahrensschritt mit Wasser befüllt. Nach Ablauf einer vorbestimmten und von der verwendeten Teesorte abhängigen Kontaktzeit wird in einem zweiten Verfahrensschritt über das Zuflussventil frisches Wasser in das Behältnis zugeführt und über das Abflussventil die Teelösung abgezogen. Durch zeitgleiches Öffnen des Zulauf- und Ablaufventils wird in einem konstanten Volumenstrom temperiertes Heißwasser durch die auszuwaschenden Teerohstoffe geführt. Dadurch erfolgt einerseits ein Austausch des möglicherweise gesättigten Wassers um weitere erwünschte lösliche Aromastoffe zu gewinnen, als auch andererseits eine Durchmischung des Behälterinhalts und daraus resultierend eine weitere Verbesserung des Kontakts zwischen Teerohstoff und Wasser. Durch eine entsprechend angepasste Einstellung der Ventile kann ein Leerlaufen des Behältnisses und damit ein Trockenfallen von Teilen der eingesetzten Teerohstoffe vermieden werden.

Es ist aber auch denkbar, dass diese beiden Verfahrensschritte in umgekehrter Reihenfolge durchgeführt werden. Dabei würde in einem ersten Verfahrensschritt über das Zuflussventil frisches Wasser in das Behältnis eingeführt und über das Abflussventil die Teelösung abgezogen. Dabei wird der Teerohstoff mit strömendem Wasser in Kontakt gebracht. In einem sich daran anschließenden Verfahrensschritt werden dann die Teerohstoffe in einem stehenden Wasser für eine vorbestimmte Verweilzeit extrahiert.

In einer bevorzugten Ausführung ist weiterhin vorgesehen, dass das Behältnis ein Gasventil aufweist.

Dieses Gasventil dient der Entlüftung des Behältnisses und der Beaufschlagung des Behältnisses mit Gas. Nach der Befüllung des Behältnisses mit einem Teerohstoff und Wasser wird das Behältnis verschlossen und die sich im Behältnis befindliche Luft entfernt. Dadurch wird ein einheitlicher und homogener Kontakt zwischen Teerohstoff und Wasser gewährleistet, so dass Toträume und Strömungsinseln eliminiert sind. Zur Entleerung des Behältnisses wird über dieses Gasventil das Behältnis mit einem unter Druck stehenden Gas beaufschlagt. Dabei kann mit einem Überdruck gearbeitet werden. Es ist aber auch denkbar, dass die Entleerung des Behältnisses drucklos erfolgt, wobei dann die Entleerung einen längeren Zeitraum in Anspruch nimmt. Bei der Verwendung eines unter Druck stehenden Gases folgt die Entleerung schneller und dadurch kann die Kontaktzeit zwischen Teerohstoff und Wasser exakter eingehalten werden. Insbesondere durch den Einsatz eines Inertgases wird der Entleerungsvorgang schonend gestaltet, so dass sich auch dies in einer Qualitätssteigerung des trinkfertigen Teegetränks niederschlägt.

Nach der Gewinnung des trinkfertigen Teegetränks und der Entleerung des Behältnisses haftet an den sich im Einsatz des Behältnisses befindlichen Teerohstoffen noch Wasser an deren Oberfläche. Dieses anhaftende Wasser enthält einen bedeutsamen Teil der gewünschten Aromastoffe. Um dieses ebenfalls zu erhalten, wird über das Gasventil das Behältnis mit Druck beaufschlagt. Dadurch wird das verbleibende tröpfchenförmige Haftwasser durch einen Entlastungsdruckschlag oder mehrere Entlastungsdruckschläge mitgerissen und damit gewonnen.

Die Erfindung wird im Folgenden anhand eines bevorzugten Ausführungsbeispiels beschrieben. Darin zeigt

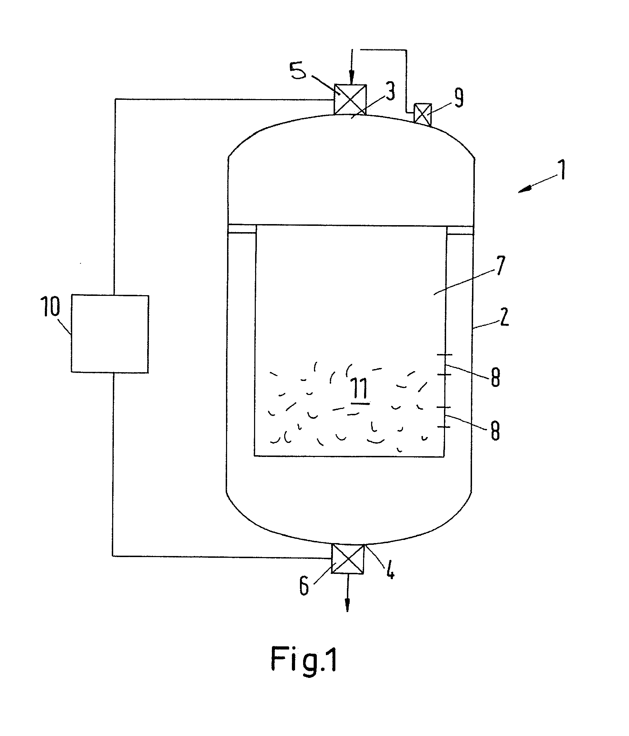

Fig. 1: die Vorrichtung zur Herstellung eines Teegetränks

Die Vorrichtung 1 zur Herstellung eines Teegetränks weist ein Behältnis 2 mit einem Einlass 3 und einem Auslass 4 auf. In dem Einlass 3 ist ein Zuflussventil 5 und am unteren Ende ein Abflussventil 6 angeordnet. Im Inneren des Behältnisses 2 befindet sich ein Einsatz 7 zur Aufnahme von Teerohstoffen 11. Dieser Einsatz 7 weist lochförmige Ausnehmungen 8 auf. Am oberen Ende des Behältnisses 2 ist außerdem ein Gasventil 9 angeordnet, über das Gas in das Behältnis 2 einströmen kann.

Zuflussventil 5, Abflussventil 6 sowie Gasventil 9 stehen in Verbindung mit einer Steuereinrichtung 10, durch die das Verfahren zur Herstellung eines Teegetränks im Wesentlichen gesteuert wird. Das Verfahren erfolgt dabei über folgende Verfahrensschritte:

### 1. Befüllen der Vorrichtung 1 mit Teerohstoffen 11

Der Einsatz 7 der Vorrichtung 1 wird mit einer definierten Menge an Teerohstoffen 11 befüllt. Dabei hängt die individuell festgelegte Menge vom Quellverhalten des verwendeten Teerohstoffs 11 ab und von der gewünschten Konzentration des trinkfertigen Teegetränks ab.

### 2. Befüllen mit temperiertem Wasser

Das verschlossene Behältnis 2 wird mit einer auf das herzustellende Teegetränk angepassten Wassermenge befüllt, wobei die im Behältnis 2 befindliche Luft durch das Gasventil 9 entweichen kann. Dadurch werden Toträume und Strömungsinseln, sowie turbulentes Strömungsverhalten in dem Behältnis 2 ausgeschlossen. Dies ist Voraussetzung für einen homogenen Kontakt zwischen dem Teerohstoff 11 und dem Wasser.

### 3. Ziehen des Teerohstoffs 11

Der Teerohstoff 11 wird für eine jeweils individuell festgelegte Zeit in dem geschlossenen Behältnis 2 ziehen gelassen. In technologischer Hinsicht erfolgt dabei ein intensives Durchweichen des verwendeten Teerohstoffs 11 und somit auch eine gute Vorlösung der erwünschten Aroma-, Geschmacks- und Farbstoffe.

### 4. Durchspülung des Teerohstoffs 11

Durch zeitgleiches Öffnen der Zuflussvetil 5 und Abflussventil 6 wird in einem konstanten Volumenstrom temperiertes Heißwasser durch den auszuwaschenden Teerohstoff 11 geführt. In diesem Schritt erfolgt einerseits ein Austausch des möglicherweise gesättigten Wassers um weitere erwünschte, lösliche Substanzen zu gewinnen, andererseits auch eine Durchmischung des Teebehälterinhaltes und daraus resultierend eine weitere Verbesserung des Rohstoff-Wasser-Kontaktes. Durch eine entsprechend angepasste Einstellung der Ventile 5, 6 kann ein Leerlaufen des Behältnisses und damit ein Trockenfallen von Teilen des eingesetzten Teerohstoffs 11 vermieden werden. Auch in diese Verfahrensstufe werden die Verfahrensparameter Durchflussvolumen und Durchflusszeit in Abhängigkeit von dem eingesetzten Teerohstoff 11 und im Hinblick auf die gewünschten Aromakomponenten über die Steuereinrichtung 10 gesteuert und optimiert.

### 5. Entleerung des Behältnisses 2

Nach Abschluss des Auswaschvorgangs wird das Abflussventil 6 geöffnet und das Behältnis 2 läuft leer. Dies kann entweder drucklos erfolgen oder auch mithilfe eines Gases, wie Luft, Kohlensäure oder Inertgas. Bei Einsatz eines Gases wird der Entleerungsvorgang beschleunigt und die festgelegten Kontaktzeiten zwischen Wasser und Teerohstoff 11 können auf diese Weise exakt eingehalten werden.

### 6. Gewinnung des Haftwassers

Nach erfolgtem Ablaufen des freien Wassers verbleibt an den Teerohstoffen 11 noch Wasser mit dem intensivsten Kontakt zu den Teerohstoffen 11. Dieses anhaftende Wasser enthält einen bedeutsamen des gewünschten Aromas und wird daher bei dem erfindungsgemäßen Verfahren auch mit gewonnen. Um auch dabei die definierte Kontaktdauer nicht unkontrolliert zu verlängern, wird das Behältnis 2 mit Druck beaufschlagt. Dabei kann jedes andere Gas der Lebensmittelindustrie verwendet werden. Durch mehrmalige Entlastungsdruckschläge werden die verbleibenden Tröpfchen mitgerissen.

### 7. Entleerung der Vorrichtung 1

Nach dem Abkühlen der Vorrichtung 1 wird der Einsatz 3 aus dem Behältnis 2 entfernt und der extrahierte Teerohstoff 11 entnommen. Zusammenfassend lässt sich feststellen, dass mit dem erfindungsgemäßen Verfahren sowie der Vorrichtung 1 zur Herstellung eines Teegetränks im industriellen Maßstab über die verschiedenen Verfahrensstufen bei jeder Verfahrensstufe die Verfahrensparameter differenziert in Abhängigkeit von dem eingesetzten Teerohstoffen 11 und spezifisch optimiert gesteuert werden können. Dadurch wird eine optimale Teequalität im großtechnischen Maßstab erreicht.

## Patentansprüche

1. Verfahren zur Herstellung eines Teegetränks, bei dem Teerohstoff und Flüssigkeit zur Gewinnung einer Teelösung miteinander in Kontakt gebracht werden, **dadurch gekennzeichnet, dass** man in einem Verfahrensschritt die Teerohstoffe für eine vorbestimmte Verweilzeit in einer stehenden Flüssigkeit und in einem anderen Verfahrensschritt mit einer strömenden Flüssigkeit in Kontakt bringt.

2. Verfahren nach Anspruch 1, **dadurch gekennzeichnet, dass** nach Ablauf der Verweilzeit die Teelösung abgeführt und beim Abführen der Teelösung gleichzeitig eine vorbestimmte Menge einer Flüssigkeit dem Teerohstoff (11) zugeführt wird.

3. Verfahren nach Anspruch 2, **dadurch gekennzeichnet, dass** als Flüssigkeit frisches Wasser dem Teerohstoff (11) zugeführt wird.

4. Verfahren nach einem der Ansprüche 2 oder 3, **dadurch gekennzeichnet, dass** eine der Menge der abgeführten Teelösung entsprechende Menge an Flüssigkeit dem Teerohstoff zugeführt wird.

5. Verfahren nach einem der Ansprüche 1 bis 4, **dadurch gekennzeichnet, dass** man den Teerohstoff (11) und das Wasser in einem Behältnis (2) miteinander in Kontakt bringt und nach Ablauf der Verweilzeit eine Strömung von einem Einlass (3) des Behältnisses (2) zu einem Auslass (4) des Behältnisses (2) erzeugt.

6. Verfahren nach Anspruch 5, **dadurch gekennzeichnet, dass** das Behältnis (2) zur Entleerung mit einem unter Druck stehenden Gas beaufschlagt wird.

7. Verfahren nach einem der Ansprüche 5 oder 6, **dadurch gekennzeichnet, dass** nach der Entleerung des Behältnisses (2) das an dem Teerohstoff (11) anhaftende Wasser gelöst wird.

8. Verfahren nach Anspruch , **dadurch gekennzeichnet, dass** zur Lösung des anhaftenden Wassers Druckstöße mit Gas erzeugt werden.

9. Vorrichtung zur Durchführung des Verfahrens nach einem der Ansprüche 1 bis 8, **dadurch gekennzeichnet, dass** das Behältnis (2) ein Zuflussventil (5) und ein Abflussventil (6) sowie eine Steuereinrichtung (10) aufweist, die das Zuflussventil (5) und das Abflussventil (6) gleichzeitig öffnet.

10. Vorrichtung nach Anspruch 9, **dadurch gekennzeichnet, dass** das Behältnis (2) ein Gasventil (9) aufweist.

## Geänderte Patentansprüche

### Geänderte Patentansprüche gemäss Regel 137(2) EPÜ.

1. Verfahren zur industriellen Herstellung eines trinkfertigen Teegetränks, bei dem Teerohstoff und Flüssigkeit zur Gewinnung einer Teelösung miteinander in Kontakt gebracht werden, **dadurch gekennzeichnet, dass** man in einem ersten Verfahrensschritt die Teerohstoffe für eine vorbestimmte Verweilzeit in einer stehenden Flüssigkeit und in einem zweiten Verfahrensschritt mit einer anderen strömenden Flüssigkeit in Kontakt bringt.

2. Verfahren nach Anspruch 1, **dadurch gekennzeichnet, dass** nach Ablauf der Verweilzeit die Teelösung abgeführt und beim Abführen der Teelösung gleichzeitig eine vorbestimmte Menge einer Flüssigkeit dem Teerohstoff (11) zugeführt wird.

3. Verfahren nach Anspruch 2, **dadurch gekennzeichnet, dass** als Flüssigkeit Wasser dem Teerohstoff (11) zugeführt wird.

4. Verfahren nach einem der Ansprüche 2 oder 3, **dadurch gekennzeichnet, dass** eine der Menge der abgeführten Teelösung entsprechende Menge an Flüssigkeit dem Teerohstoff zugeführt wird.

5. Verfahren nach einem der Ansprüche 1 bis 4, **dadurch gekennzeichnet, dass** man den Teerohstoff (11) und das Wasser in einem Behältnis (2) miteinander in Kontakt bringt und nach Ablauf der Verweilzeit eine Strömung von einem Einlass (3) des Behältnisses (2) zu einem Auslass (4) des Behältnisses (2) erzeugt.

6. Verfahren nach Anspruch 5, **dadurch gekennzeichnet, dass** das Behältnis (2) zur Entleerung mit einem unter Druck stehenden Gas beaufschlagt wird.

7. Verfahren nach einem der Ansprüche 5 oder 6, **dadurch gekennzeichnet, dass** nach der Entleerung des Behältnisses (2) das an dem Teerohstoff (11) anhaftende Wasser gelöst wird.

8. Verfahren nach Anspruch 7, **dadurch gekennzeichnet, dass** zur Lösung des anhaftenden Wassers Druckstöße mit Gas erzeugt werden.
